# EUROPÄISCHE PATENTSCHRIFT

(11) **EP 0 927 861 B1**
(45) Veröffentlichungstag und Bekanntmachung des Hinweises auf die Patenterteilung: **01.09.1999**
(21) Anmeldenummer: 97810811.6
(22) Anmeldetag: 31.10.1997
(51) Int. Cl.: F25D 16/00

(54) **Kältespeicheranlage mit einem Eisspeicher**
Cooling storage system with an ice bank
Appareil d'accumulation de froid avec stockage de glace

(43) Veröffentlichungstag der Anmeldung: 07.07.1999
(73) Patentinhaber: Fafco SA, 2500 Biel (CH)
(72) Erfinder: Kimborn, Gunnar, 2514 Ligerz (CH)
(74) Vertreter: BOVARD AG - Patentanwälte

(56) Entgegenhaltungen:
- EP-A- 0 348 771
- GB-A- 2 173 886
- US-A- 2 227 244
- US-A- 5 255 526
- US-A- 5 598 720
- US-A- 5 647 225

## Beschreibung

Die vorliegende Erfindung bezieht sich auf eine Kältespeicheranlage mit einem Eisspeicher gemäss dem Oberbegriff des Patentanspruchs 1. Eine solche Anlage ist z.B. aus der US-A-5 647 225 bekannt.

Derartige Kältespeicheranlagen mit einem Eisspeicher werden insbesondere bei Klima- und Kälteanlagen eingesetzt, die einen Kältebedarf haben, der beispielsweise innerhalb von 24 Stunden enormen Schwankungen unterworfen ist. Während der Nacht kann beispielsweise ein sehr geringer Kältebedarf vorliegen, während tagsüber dieser Bedarf sehr hoch sein kann. Ohne den Einsatz von derartigen Speichern müsste die Leistung von entsprechenden Kälteanlagen auf diese Spitzenlast ausgelegt werden. Dadurch wären aber die Anlagen für den grössten Teil der Betriebsstunden überdimensioniert. Hierdurch würden unnötig hohe Investitions- und Betriebskosten entstehen, der Anlagenutzungsgrad ist sehr niedrig.

Durch den Einsatz von Eisspeichern kann die Kälteerzeugung beispielsweise während der Nacht durchgeführt werden. Dies ist insbesondere dann lohnenswert, wenn der Strom zu einem niedrigeren Tarif bezogen werden kann. Tagsüber kann dann beispielsweise der Kältebedarf durch den Speicher abgedeckt werden, die elektrischen Belastungsspitzen durch Kältemaschinen werden massiv vermindert. Dadurch können derartige Anlagen kleiner dimensioniert werden, was sich durch eine wesentlich bessere Anlagenausnutzung und niedrigere Betriebskosten auszeichnet.

Kältespeicheranlagen mit Eisspeicher sind bekannt. Hierbei sind die Eisspeicher, die aus einem isolierten Behälter bestehen, der mit Wasser gefüllt ist, mit Wärmetauschern mit entsprechenden Wärmetauscherrohren versehen. Zum Aufladen des Speichers wird durch die Wärmetauscherrohre ein Medium geleitet, das in einer Kältemaschine abgekühlt wird. Im Behälter entstehen dann wachsende, um die jeweiligen Wärmetauscherrohre angeordnete Eiszylinder. Zum Entladen dieses Speichers wird von oben in den Behälter Wasser zugeführt, während unten im Behälter das gekühlte Wasser abgeführt werden kann. Während dieses Vorgangs werden die um die Wärmetauscherrohre gebildeten Eiszylinder vom Wasser umströmt, die Eiszylinder schmelzen.

Diese Art von Eiswasserspeicher weist den Nachteil auf, dass das sich im Behälter befindende Wasser beim Aufladen des Speichers nicht vollständig zu einem Eisblock gefrieren darf, da Durchströmräume für das Wasser vorhanden sein müssen, damit zwischen Eiszylinder und Wasser ein effizienter Wärmeübergang stattfinden kann. Demzufolge müssen die einzelnen Wärmetauscherrohre genügend Abstand voneinander haben, was einen grossen Platzbedarf zur Folge hat. Des weiteren ist es erforderlich, dass eine Entladung jeweils bis zur vollständigen Abschmelzung des Eises durchgeführt wird, bevor wieder mit der Aufladung, d.h. mit der Bildung von Eis, gestartet werden kann. Wenn kein vollständiges Abschmelzen stattfindet, besteht die Gefahr, dass sich durch ungleichmässiges Abschmelzen und ungleichmässiger Eisbildung im Behälter grosse Eisblöcke bilden können, die zum Entladen nicht mehr durch das Wasser durchströmt werden, wodurch eine Einbusse der Effizienz auftritt. Es ist somit erforderlich, dass derartige Eisspeicher überwacht werden, was zusätzliches Personal erfordert. Diese Eisspeicher sind somit eher für Industriebetriebe geeignet. Mit diesem Eisspeicher wird aber der Vorteil erreicht, dass das bei der Entladung abgeführte Wasser eine tiefe Temperatur aufweist, und dass die Entladeleistung gross ist.

Es sind auch Eisspeicher bekannt, die ebenfalls einen mit Wasser gefüllten isolierten Behälter aufweisen, in dem in gleicher Weise Wärmetauscher mit Wärmetauscherrohren eingesetzt sind, und durch welche ein in einer Kältemaschine gekühltes Medium zirkuliert, so dass das im Behälter sich befindende Wasser beim Aufladen des Speichers in Eis umgewandelt wird. Hierbei kann so lange gekühlt werden, bis das Wasser vollständig gefroren ist und einen Eisblock bildet. Die Entladung erfolgt bei diesen Eisspeichern wie bei der Aufladung über die Wärmetauscherrohre der Wärmetauscher, indem durch die Wärmetauscherrohre das zu kühlende Medium durchgeleitet wird, das dann gekühlt einer entsprechenden Anlage zugeführt werden kann. Durch den Wärmeübergang wird das Eis geschmolzen, wobei dies zuerst in unmittelbarer Umgebung der Wärmetauscherrohre erfolgt. Diese Eisspeicher haben den Vorteil, dass die Bauweise sehr kompakt ist, da die Wärmetauscherrohre relativ nahe beieinander angeordnet sein können. Die Betriebssicherheit ist sehr gross, es ist nicht erforderlich, dass die Entladung solange durchgeführt wird, bis das Eis vollständig zu Wasser geschmolzen ist, ein Aufladen kann jederzeit wieder durchgeführt werden. Die Effizienz dieser Eisspeicher ist gegenüber den vorgängig dargestellten Eisspeichern geringer, da schon bald nach dem Entladevorgang zwischen den Wärmetauscherrohren und dem umgebenden Eis ein mit Wasser gefüllter Raum entsteht, wodurch die Effizienz des Wärmeübergangs eingeschränkt wird.

Die Aufgabe der Erfindung besteht nun darin, eine Kältespeicheranlage mit einem Eisspeicher so zu gestalten, dass eine hohe Effizienz erreicht wird, dass der Eisspeicher jederzeit aufgeladen werden kann, ohne dass vorgängig eine vollständige Entladung stattgefunden haben muss, dass das zur Verfügung gestellte gekühlte Medium eine tiefe Temperatur aufweist und dass kein Überwachungspersonal erforderlich ist.

Erfindungsgemäss erfolgt die Lösung dieser Aufgabe durch die im Anspruch 1 aufgeführte Merkmalskombination.

Durch diese Anordnung kommen die jeweiligen Vorteile, die die beiden vorgängig dargestellten Eisspeicher auszeichnen, gemeinsam zum Tragen. Bei der Entladung des Speichers entstehen zwischen den Wärmetauscherrohren der ersten Wärmetauscher im Behälter und dem diese umgebenden Eis durch das Abschmelzen des Eises sehr rasch Durchgänge, durch welche das Wasser zirkulieren kann. Das die Wärmetauscherrohre der ersten Wärmetauscher durchströmende Medium wird über einen zweiten Kreislauf in einen zweiten Wärmetauscher geleitet, in welchem das Arbeitsmedium des Arbeitsmediumkreislaufes gekühlt wird. Gleichzeitig wird das Wasser dem Behälter entnommen, mit welchem das Arbeitsmedium zusätzlich gekühlt werden kann. Dadurch wird ein optimaler Wirkungsgrad erreicht.

5 Das beim Entladen des Eisspeichers entnommene Wasser kann beispielsweise über einen Wärmetauscher das Arbeitsmedium zusätzlich kühlen, und danach in den Behälter zurückgeleitet werden, es ist aber auch denkbar, dass das dem Behälter entnommene Wasser direkt dem Arbeitsmedium beigemischt wird, wodurch ebenfalls eine zusätzliche Kühlung erreicht wird. Dem Behälter kann bei dieser Anwendung auch Frischwasser zugeführt werden.

In vorteilhafter Weise sind im Arbeitsmediumkreislauf die Rücklaufleitung und die Vorlaufleitung über eine weitere Leitung direkt miteinander verbunden, wobei bei der Verbindungsstelle der weiteren Leitung mit der Vorlaufleitung ein Bypassventil angeordnet ist, was ermöglicht, dass die Temperatur des Arbeitsmediums, das von der entsprechenden Anlage abgegeben wird, geregelt werden kann.

Um einen guten Wirkungsgrad zu erreichen, ist es erforderlich, dass das Wasser im Behälter ständig in Bewegung gehalten wird, wozu Mittel zur Umwälzung vorgesehen sind. In vorteilhafter Weise bestehen diese Mittel aus einem Druckluftleitungsnetz, dessen Leitungen im Bodenbereich des Behälters angeordnet sind, und in welche Druckluft einspeisbar ist, die dann durch in den Leitungen angebrachte Bohrungen in den Behälter ausströmt und in Form von Blasen an die Oberfläche des Wassers aufsteigt. Dadurch wird in einfacher Weise eine optimale Bewegung des Wassers im Behälter erreicht, Toträume können keine entstehen.

Eine weitere vorteilhafte Ausgestaltung der Erfindung besteht darin, dass die Zuführung des Wassers über die ganze Oberfläche im Behälter erfolgt, und dass die Entnahme des Wassers über die ganze Bodenfläche des Behälters verteilt durchgeführt wird. Damit wird ein gleichmässiges Entladen des Eisspeichers erreicht.

Weitere vorteilhafte Ausgestaltungen der erfindungsgemässen Anlage ergeben sich aus den weiteren abhängigen Ansprüchen.

Ausführungsbeispiele der erfindungsgemässen Kältespeicheranlage werden nachfolgend anhand der beiliegenden Zeichnung beispielhaft näher erläutert.

Es zeigt:
Fig. 1 ein Schaltschema eines Teils einer ersten Ausführungsform einer Kältespeicheranlage;
Fig. 2 ein Schaltschema eines Teils einer zweiten Ausführungsform einer Kältespeicheranlage;
Fig. 3 die Darstellung eines Eisspeichers, zum Teil im Schnitt;
Fig. 4 eine Ansicht in Längsrichtung der Rohre auf den ersten Wärmetauschers;
Fig. 5 eine Seitenansicht des ersten Wärmetauschers gemäss Fig. 4;
Fig. 6 in schematischer Darstellung ein horizontaler Schnitt durch den Behälter in vollständig entladenem Zustand des Eisspeichers;
Fig. 7 eine Darstellung gemäss Fig. 6 des Behälters beim Aufladen des Eisspeichers mit beginnender Eisbildung;
Fig. 8 eine Darstellung des Behälters gemäss Fig. 6 und 7, im vollständig aufgeladenen Zustand des Eisspeichers; und
Fig. 9 eine Darstellung des Behälters gemäss Fig. 6 bis 8, mit teilweise entladenem Eisspeicher.

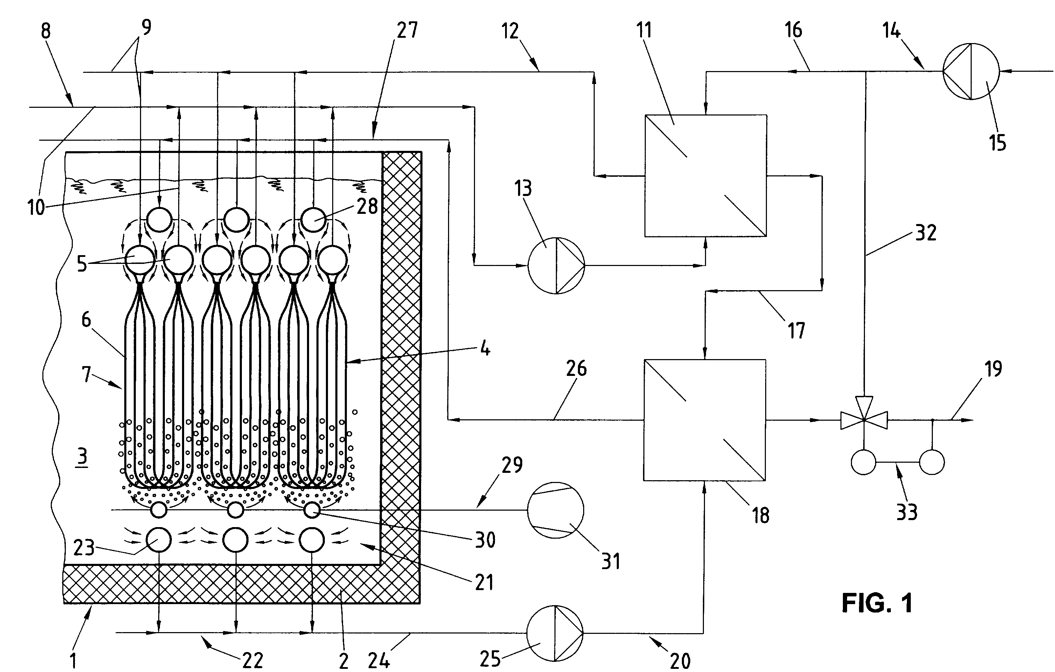

Wie aus Fig. 1 ersichtlich ist, umfasst die Kältespeicheranlage einen Eisspeicher 1, der aus einem isolierten Behälter 2 besteht. Dieser Behälter 2 ist mit Wasser 3 gefüllt. Im Behälter 2 sind erste Wärmetauscher 4 eingesetzt, die jeweils aus zwei parallel angeordneten Rohren 5 bestehen, die über Wärmetauscherrohre 6, die eine Schlaufe 7 bilden, miteinander verbunden sind, wie später noch beschrieben wird.

Diese ersten Wärmetauscher 4 bilden zusammen mit einer nicht dargestellten Kältemaschine einen ersten Kreislauf 8. In diesem ersten Kreislauf 8 zirkuliert in bekannter Weise ein Medium, das vorzugsweise eine Glykollösung ist. Dieses Medium gelangt aus der nicht dargestellten Kältemaschine beim Aufladen des Eisspeichers über die Zuführleitungen 9 in die ersten Wärmetauscher 4 und über die Wegführleitungen 10 wieder zur nicht dargestellten Kältemaschine. Das Wasser 3 im Behälter 2 gefriert bei diesem Aufladevorgang zu Eis, wie später noch beschrieben wird.

Zum Entladen des Eisspeichers wird die nicht dargestellte Kältemaschine, die zusammen mit den ersten Wärmetauschern 4 den ersten Kreislauf 8 bilden, in bekannter Weise abgeschaltet. Die ersten Wärmetauscher 4 bilden nun zusammen mit einem zweiten Wärmetauscher 11 einen zweiten Kreislauf 12, in welchem das Medium zirkulieren kann, angetrieben durch die zweite Pumpe 13.

Dieser zweite Wärmetauscher 11 wird von einem Arbeitsmedium durchlaufen, welches in einem Arbeitsmediumkreislauf 14 zirkuliert, angetrieben durch eine erste Pumpe 15. Dieses Arbeitsmedium gelangt aus einer nicht dargestellten Kühlanlage über eine Rücklaufleitung 16 in den zweiten Wärmetauscher 11. Über eine Verbindungsleitung 17 gelangt das Arbeitsmedium in einen dritten Wärmetauscher 18, durchläuft diesen, und wird über eine Vorlaufleitung 19 der nicht dargestellten Kühlanlage zugeleitet.

Der dritte Wärmetauscher 18 wird in einem dritten Kreislauf 20 vom Wasser 3 des Behälters 2 durchströmt. Hierzu sind im Bodenbereich 21 des Behälters 2 Wegführmittel 22 angeordnet, die aus mehreren Rohrleitungen 23 bestehen, die verteilt angeordnet und miteinander verbunden sind. Die Rohrleitungen 23 sind mit Durchgangsöffnungen versehen, durch welche das zu entnehmende Wasser in die Rohrleitungen 23 einströmen kann. Dieses Wasser wird über die Leitung 24 mittels einer dritten Pumpe 25 in den dritten Wärmetauscher 18 geleitet, durchströmt diesen und wird über die Leitung 26 den Zuführmitteln 27 zugeführt.

Diese Zuführmittel 27 bestehen ebenfalls aus mehreren Rohrleitungen 28, die im Bereich der Oberfläche des Wassers 3 im Behälter 2 verteilt angeordnet und miteinander verbunden sind. Diese Rohrleitungen 28 sind ebenfalls mit Durchgangsöffnungen ausgestattet, durch welche das zurückfliessende Wasser in den Behälter 2 ausströmen kann.

Im Bodenbereich 21 des Behälters 2 sind Mittel 29 zur Umwälzung des Wassers 3 im Behälter 2 vorgesehen. Diese Mittel 29 bestehen aus einem Druckluftleitungsnetz, deren Leitungen 30 im Bodenbereich 21 des Behälters 2 angeordnet sind. Über einen Druckluftkompressor 31 wird diesen Leitungen 30 Druckluft zugeführt, diese Leitungen 30 sind mit Bohrungen ausgestattet, durch welche die zugeführte Druckluft in das Wasser 3 ausströmt. Die Blasen steigen im Wasser 3 des Behälters 2 auf, wodurch praktisch das ganze Wasservolumen ständig bewegt wird.

Das aus den ersten Wärmetauschern 4 in den zweiten Wärmetauscher 11 geleitete Medium weist beispielsweise eine Temperatur von etwa 3° C auf. Das in den zweiten Wärmetauscher 11 geleitete Arbeitsmedium weist eine Temperatur von etwa 9° C auf. In diesem zweiten Wärmetauscher 11 wird dieses Arbeitsmedium auf etwa 5° C abgekühlt. Das aus dem zweiten Wärmetauscher 11 abgeleitete Medium, das in die ersten Wärmetauscher 4 zurückgeleitet wird, wird hierbei auf etwa 7° C erwärmt.

Das über die Leitung 24 in den dritten Wärmetauscher 18 geleitete Wasser hat beispielsweise eine Temperatur von etwa 0,3° C. Im dritten Wärmetauscher 18 wird das über die Leitung 17 zugeführte Arbeitsmedium, das eine Temperatur von etwa 5° C hat, abgekühlt auf beispielsweise 1° C. Dieses abgekühlte Arbeitsmedium wird dann über die Vorlaufleitung 19 der Kühlanlage zugeführt. Das über die Leitung 26 in den Behälter rückgeführte Wasser weist nach dem Verlassen des dritten Wärmetauschers eine Temperatur von etwa 3° C auf.

Zwischen der Rücklaufleitung 16 des Arbeitsmediumkreislaufes 14 und der Vorlaufleitung 19 ist eine weitere Leitung 32 vorgesehen, welche die Rücklaufleitung 16 und die Vorlaufleitung 19 direkt miteinander verbindet. In der Verbindungsstelle dieser weiteren Leitung 32 mit der Vorlaufleitung 19 ist ein Bypassventil 33 angebracht. Dieses Bypassventil 33 kann in bekannter Weise angesteuert werden, wodurch die Vorlauftemperatur des Arbeitsmediums geregelt werden kann.

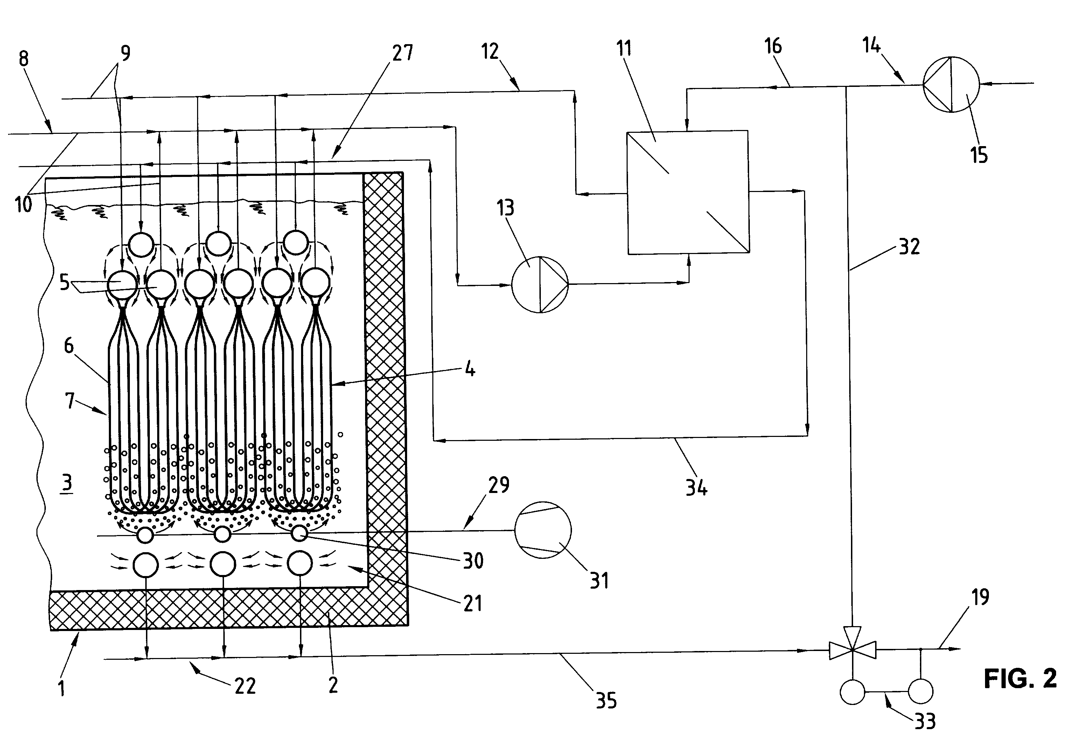

Fig. 2 zeigt das Schaltschema einer zweiten Ausführungsform einer erfindungsgemässen Kältespeicheranlage mit Eisspeicher. Bei der Beschreibung dieses zweiten Ausführungsbeispiels sind für identische Bauteile die gleichen Bezugszeichen verwendet worden wie bei der Beschreibung von Fig. 1. In identischer Weise wie beim ersten Ausführungsbeispiel besteht der Eisspeicher 1 aus einem isolierten Behälter 2, der mit Wasser 3 gefüllt ist. Ebenfalls vorgesehen sind die ersten Wärmetauscher 4, gebildet durch die Rohre 5 und die Wärmetauscherrohre 6, die Schlaufen 7 bilden. Das Aufladen des Eisspeichers erfolgt in gleicher Weise, wie er zu Fig. 1 beschrieben worden ist, über den ersten Kreislauf 8, wobei das Wasser 3, das sich im Behälter 2 befindet, zu Eis gefriert.

Zum Entladen des Eisspeichers 1 wird, wie beim Ausführungsbeispiel gemäss Fig. 1, die Kältemaschine und der erste Kreislauf ausgeschaltet. Über den zweiten Kreislauf 12 wird mittels der zweiten Pumpe 13 das Medium, das auch hier aus einer Glykollösung besteht, durch den zweiten Wärmetauscher 11 geleitet und gelangt in die ersten Wärmetauscher 4 zurück. Durch diesen zweiten Wärmetauscher 11 wird in gleicher Weise wie beim vorgängig beschriebenen Ausführungsbeispiel das Arbeitsmedium geleitet, das in einem Arbeitsmediumkreislauf 14 zirkuliert, angetrieben durch die erste Pumpe 15. In diesem Ausführungsbeispiel ist das Arbeitsmedium Wasser.

Nach dem Durchlauf des zweiten Wärmetauschers 11 wird das Wasser über eine erste Verbindungsleitung 34 den Zuführmitteln 27 zugeleitet, das Wasser gelangt somit in den Behälter 2. Die Wegführmittel 22 sind über eine zweite Verbindungsleitung 35 mit der Vorlaufleitung 19 des Arbeitsmediumkreislaufes 14 verbunden.

Das Wasser, das über die Rücklaufleitung 16 dem zweiten Wärmetauscher 11 zugeleitet wird, weist eine Temperatur von beispielsweise etwa 9° C auf. In diesem zweiten Wärmetauscher 11 wird es gekühlt auf beispielsweise etwa 5° C. Das in den zweiten Wärmetauscher 11 eingeführte Medium, das aus den ersten Wärmetauschern 4 kommt, hat eine Temperatur von etwa 3° C, wird im zweiten Wärmetauscher 11 auf beispielsweise 7° C erwärmt und in die ersten Wärmetauscher 4 zurückgeleitet. Das über die Wegführmittel 22 aus dem Behälter entnommene Wasser weist beispielsweise eine Temperatur von etwa 0,3° C auf, und gelangt so in die Vorlaufleitung 19.

Auch bei diesem Ausführungsbeispiel sind die Rücklaufleitung 16 und die Vorlaufleitung 19 durch eine weitere Leitung 32 direkt miteinander verbunden, wobei in der Verbindungsstelle zwischen dieser weiteren Leitung 32 und der Vorlaufleitung 19 ebenfalls ein Bypassventil 33 eingesetzt ist, wodurch in bekannter Weise die Vorlauftemperatur geregelt werden kann.

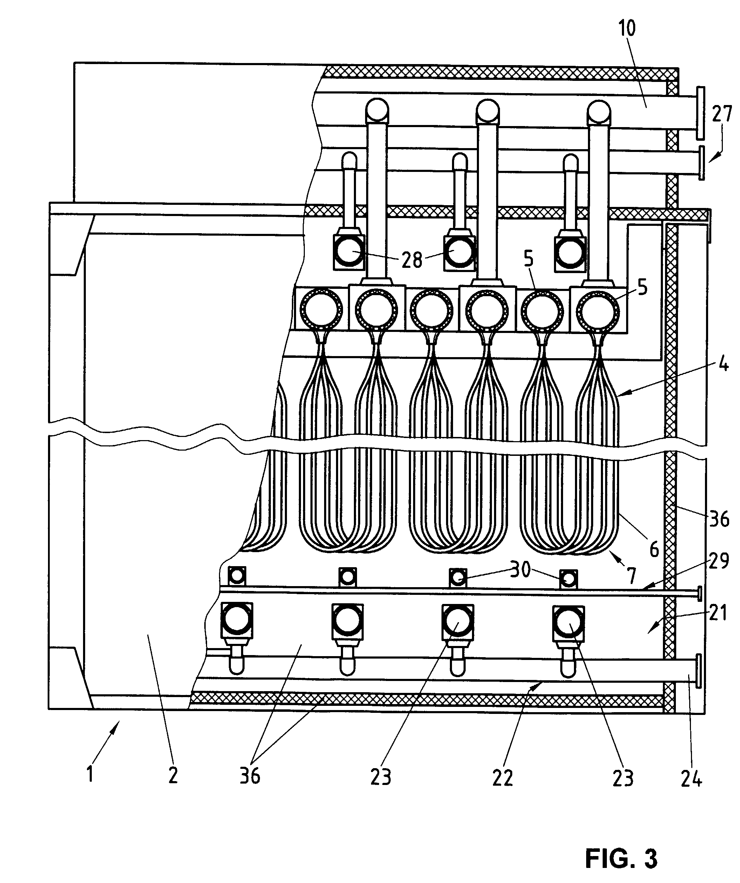

In Fig. 3 ist der Aufbau eines Eisspeichers 1 ersichtlich. Dieser besteht aus dem Behälter 2, der aus isolierten Wandungen 36 zusammengesetzt ist. In diesem Behälter 2 sind die ersten Wärmetauscher 4 eingesetzt, die aus den parallel angeordneten Rohren 5 zusammengesetzt sind, die über die Wärmetauscherrohre 6, welche Schlaufen 7 bilden, miteinander verbunden sind. Jeweils eines der Rohre 5 ist mit der Wegführleitung 10 verbunden. Das andere Rohr 5 der ersten Wärmetauscher 4 ist in nicht dargestellter Weise mit der Zuführleitung 9 (Fig. 1) verbunden. In dieser Darstellung sind die Zuführmittel 27 ersichtlich, die, wie bereits zu Fig. 1 beschrieben worden ist, aus Rohrleitungen 28 bestehen, in welchen Bohrungen angebracht sind, durch welche das Wasser in den Behälter 2 ausströmen kann.

Im Bodenbereich 21 des Behälters sind die Wegführmittel 22 dargestellt, die ebenfalls, wie bereits beschrieben, Rohrleitungen 23 aufweisen, die mit Bohrungen versehen sind, durch welche das Wasser des Behälters 2 in diese Rohrleitungen 23 gelangen können und durch die Leitung 24 zur Weiterverwendung abgeleitet wird.

Ebenfalls im Bodenbereich 21 des Behälters 2 sind, wie bereits erwähnt, die Mittel zur Umwälzung des Wassers im Behälter 2 angebracht, welche aus Druckluftleitungen 30 gebildet sind, die mit Bohrungen versehen sind, durch welche die zugeführte Druckluft in das Wasser 3 des Behälters 2 entweichen kann.

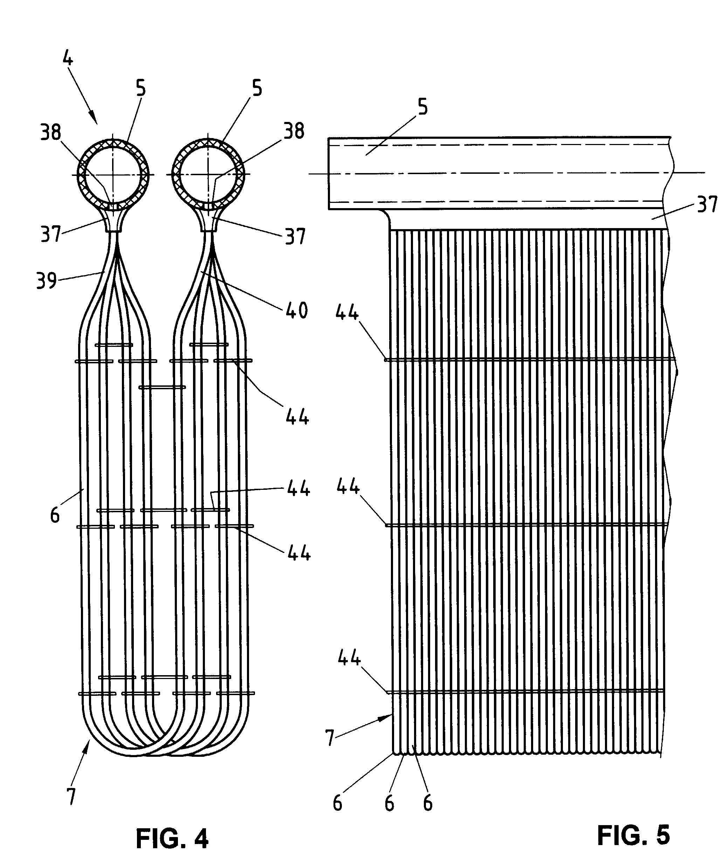

Fig. 4 und 5 zeigen den Aufbau der ersten Wärmetauscher 4. Jeweils ein derartiger erster Wärmetauscher 4 ist aus zwei parallel zueinander verlaufenden Rohren 5 gebildet. Längs dieser Rohre 5 ist jeweils ein Kanal 37 angebracht, der mit dem jeweiligen Rohr 5 über Bohrungen 38 verbunden ist. Das eine Ende 39 eines Wärmetauscherrohres 6 ist in den Kanal 37 des einen Rohres 5 eingesetzt. Das andere Ende 40 dieses Wärmetauscherrohres 6 ist mit dem anderen Kanal 37 des anderen Rohres 5 verbunden. Dadurch bildet das entsprechende Wärmetauscherrohr 6 eine Schlaufe 7.

In vorteilhafter Weise bestehen die Rohre 5, die Kanäle 37 und die Wärmetauscherrohre 6 dieser ersten Wärmetauscher 4 aus Polypropylen.

Wie in Fig. 5 ersichtlich ist, sind die Wärmetauscherrohre 6 unmittelbar aneinander liegend in den jeweiligen Kanal 37 eingesetzt. Um zu erreichen, dass diese Wärmetauscherrohre 6 möglichst gleichmässig im Wasservolumen des Behälters verteilt sind, sind die jeweils nebeneinander liegenden Schlaufen 7 in der jeweiligen normal zu den Rohren 5 stehenden Ebene gegenseitig verschoben. Durch Distanzstege 44 werden diese Wärmetauscherrohre 6 in der entsprechenden Position gehalten. Die Herstellung dieser ersten Wärmetauscher 4 ist kostengünstig.

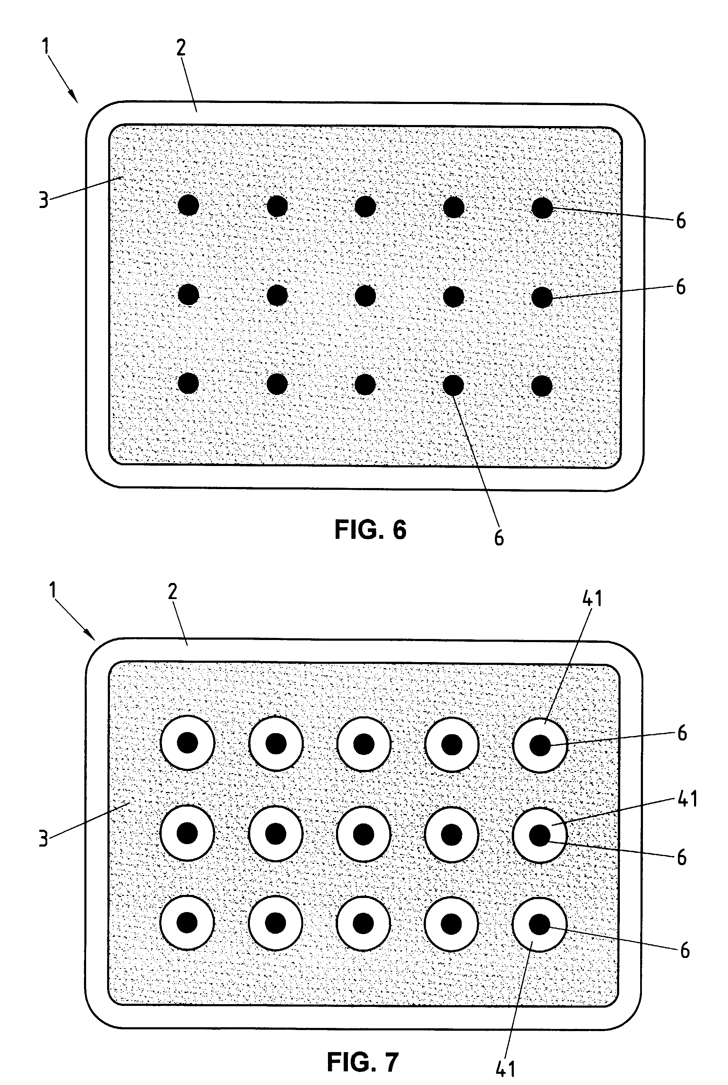

Nachfolgend wird nun die Bildung des Eises im Eisspeicher beim Aufladen und das Schmelzen des Eises beim Entladen des Eisspeichers mit Bezugnahme auf die Fig. 6 bis 9 beschrieben. Fig. 6 zeigt die Darstellung einer Schnittebene durch den Behälter 2 des Eisspeichers 1, die normal zu den senkrecht verlaufenden Wärmetauscherrohren 6 gelegt ist. Fig. 6 zeigt den Zustand des vollständig entladenen Eisspeichers. Das Wasser 3 ist vollständig eisfrei.

In diesem Zustand wird der Eisspeicher aufgeladen, wie dies zu Fig. 1 beschrieben worden ist. Durch die Wärmetauscherrohre 6 wird die auf unter 0° C gekühlte Glykollösung geleitet. In der unmittelbaren Umgebung der Wärmetauscherrohre 6 wird Eis gebildet, es entstehen Eiszylinder 41, in deren Zentrum jeweils ein Wärmetauscherrohr 6 verläuft, wie dies in Fig. 7 dargestellt ist.

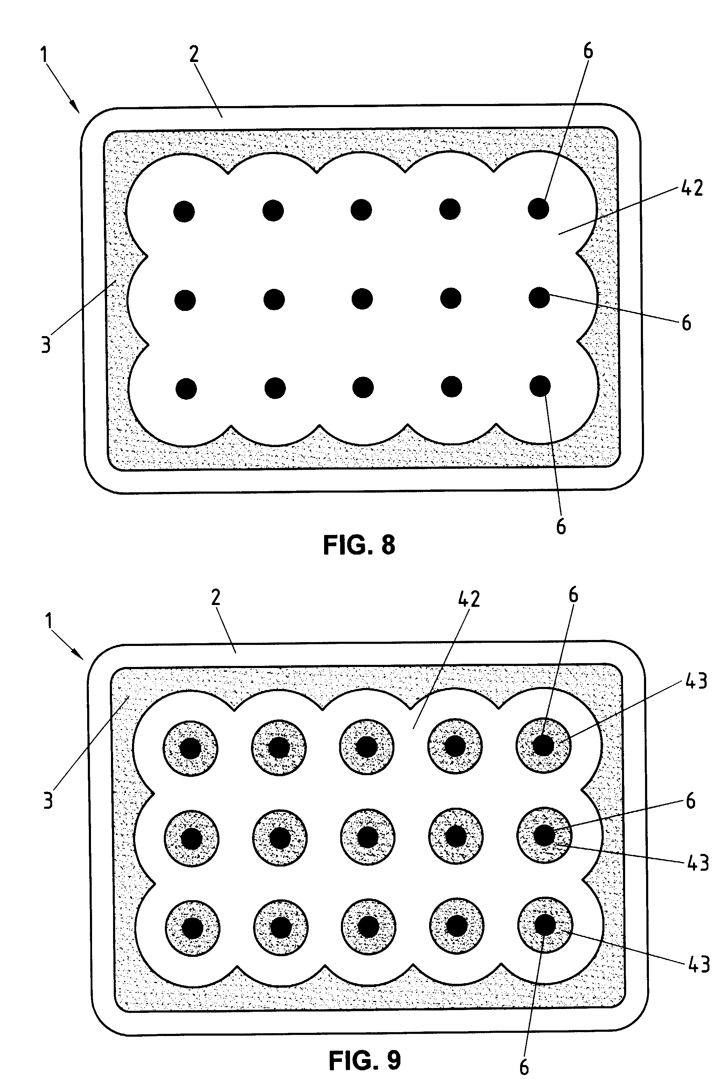

Dieser Aufladevorgang wird solange fortgeführt, bis die in Fig. 7 dargestellten Eiszylinder 41 zusammenwachsen und einen vollständigen Eisblock 42 bilden, wie dies in Fig. 8 dargestellt ist. Dieser Eisblock 42 füllt den Behälter nicht vollständig aus, dieser Eisblock 42 ist allseitig von Wasser 3 umgeben.

Zum Entladen des Eisspeichers 1 wird, wie dies zu Fig. 1 und 2 beschrieben worden ist, durch die Wärmetauscherrohre 6 die Glykollösung geleitet, die im zweiten Wärmetauscher 11 dem Arbeitsmedium Wärme entzogen hat. Durch diesen Vorgang beginnt der Eisblock 42, dargestellt in Fig. 8, in unmittelbarer Umgebung der Wärmetauscherrohre 6 zu schmelzen, ersichtlich in Fig. 9, es entstehen zylindrische Räume 43, die mit Wasser gefüllt sind. Da neben diesem Vorgang auch das Wasser 3 im Behälter, wie ebenfalls zu Fig. 1 und 2 beschrieben worden ist, im Bodenbereich entnommen, durch den Entzug von Wärme aus dem Arbeitsmedium erwärmt und oberflächenseitig wieder in den Behälter 2 eingegeben wird, durchströmt das Wasser diese zylindrischen Räume 43. Damit dies möglichst gleichmässig über den ganzen Behälter erreicht wird, sind die Mittel 29 vorgesehen (Fig. 1, Fig. 2), mit welchen das Wasser 3 während des Entladevorgangs dauernd bewegt wird. Durch diese Vorgehensweise entsteht eine sehr grosse Oberfläche im Eisblock 42, an welcher das Eis schmilzt. Das Wasser in den zylindrischen Räumen 43 fliesst praktisch im Gegenstrom zu der von unten durch die Mittel 30 eingespeisten Luft. Dadurch wird ein sehr guter Wärmeübergang erreicht. Während dem Abschmelzvorgang wird die wirksame Eisoberfläche immer grösser. Dadurch wird eine sehr hohe Effizienz derartiger Eisspeicher erreicht, die erreichbare Temperatur des gekühlten Arbeitsmediums liegt nur sehr wenig über 0° C.

Dieser Entladevorgang, wie er in Fig. 9 dargestellt ist, kann solange fortgeführt werden, bis das Eis vollständig geschmolzen ist, wodurch die Ausgangssituation, dargestellt in Fig. 6 erreicht wird. Es ist aber nicht erforderlich, dass die Entladung bis zur vollständigen Abschmelzung des Eises erfolgt, es kann auch in einem Zwischenstadium, wie dies beispielsweise in Fig. 9 dargestellt ist, wieder mit der Aufladung des Eisspeichers begonnen werden, ohne dass Beschädigungen auftreten. Dies ist deshalb der Fall, weil die Bildung des Eises jeweils um die Wärmetauscherrohre 6 beginnt, die Volumenänderungen können durch das Abfliessen des Wassers in den Zwischenräumen des neu gebildeten Eises und dem Eisblock ausgeglichen werden.

Durch diese erfindungsgemässe Kältespeicheranlage können die Anforderungen, die an einen derartigen Eisspeicher gestellt werden, in optimalster Weise erfüllt werden, die Effizienz ist hoch, die Betriebskosten und die Anlagekosten sind gering.

## Patentansprüche

1. Kältespeicheranlage mit einem Eisspeicher (1), welcher einen mit Wasser (3) gefüllten isolierten Behälter (2), in welchem Wärmetauscherrohre (6) von ersten Wärmetauschern (4) eingesetzt sind, die zusammen mit mindestens einer Kältemaschine einen ersten Kreislauf (8) bilden, in welchem zum Aufladen des Eisspeichers (1) ein Medium zirkuliert und die Wärmetauscherrohre (6) durchläuft, so dass das im Behälter (2) enthaltene Wasser in Eis umgewandelt wird, sowie Mittel (29) zur Umwälzung des Wassers im Behälter (2) umfasst, und mit einem zweiten Kreislauf (12), welcher aus den Wärmetauscherrohren (6) der ersten Wärmetauscher (4) und mindestens einem zweiten Wärmetauscher (11) gebildet ist, durch welchen zweiten Kreislauf (12) das Medium bei der Entladung des Speichers (1) umleitbar ist, dadurch gekennzeichnet, daß Zuführmittel (27) zur Zuführung von Wasser in den Behälter (2) und Wegführmittel (22) zur Entnahme von gekühltem Wasser aus dem Behälter (2) zur Entladung des Speichers vorgesehen sind, dass im mindestens einen zweiten Wärmetauscher (11) ein Arbeitsmedium kühlbar ist, welches in einem Arbeitsmediumkreislauf (14) zirkuliert und über eine Rücklaufleitung (16) und eine Vorlaufleitung (19) durch den zweiten Wärmetauscher (11) leitbar ist, und dass im Arbeitsmediumkreislauf (14) zwischen der Rücklaufleitung (16) und der Vorlaufleitung (19) Mittel (18; 34, 35) angebracht sind, durch welche das dem Behälter (2) entnehmbare gekühlte Wasser mit dem Arbeitsmedium in Wirkverbindung bringbar ist, so dass das Arbeitsmedium zusätzlich gekühlt wird.

2. Kältespeicheranlage nach Anspruch 1, dadurch gekennzeichnet, dass das im Arbeitsmediumkreislauf (14) zirkulierende Arbeitsmedium Wasser ist.

3. Kältespeicheranlage nach Anspruch 1 oder 2, dadurch gekennzeichnet, dass im Arbeitsmediumkreislauf (14) eine erste Pumpe (15) und im zweiten Kreislauf (12) eine zweite Pumpe (13) eingesetzt ist.

4. Kältespeicheranlage nach einem der Ansprüche 1 bis 3, dadurch gekennzeichnet, dass die im Arbeitsmediumkreislauf (14) angebrachten Mittel aus einem dritten Wärmetauscher (18) bestehen, der nach dem zweiten Wärmetauscher (11) angeordnet ist und durch welchen das Arbeitsmedium nach dem Durchlauf des zweiten Wärmetauschers (11) durchleitbar ist, und dass durch diesen dritten Wärmetauscher (18) in einem dritten Kreislauf (20) das über die Wegführmittel (22) aus dem Behälter (2) entnommene Wasser leitbar und über die Zuführmittel (27) in den Behälter (2) rückführbar ist.

5. Kältespeicheranlage nach Anspruch 4, dadurch gekennzeichnet, dass im dritten Kreislauf (20) eine dritte Pumpe (25) eingesetzt ist.

6. Kältespeicheranlage nach Anspruch 2 oder 3, dadurch gekennzeichnet, dass die im Arbeitsmediumkreislauf (14) angebrachten Mittel aus einer ersten Verbindungsleitung (34), welche den zweiten Wärmetauscher (11) mit den Zuführmittel (27) verbinden, so dass das Arbeitsmedium nach dem Durchlauf des zweiten Wärmetauschers (11) in den Behälter gelangt (2), und aus einer zweiten Verbindungsleitung (35), welche die Wegführmittel (22) mit der Vorlaufleitung (19) des Arbeitsmediumkreislaufes (14) verbindet, bestehen.

7. Kältespeicheranlage nach einem der Ansprüche 1 bis 6, dadurch gekennzeichnet, dass im Arbeitsmediumkreislauf (14) die Rücklaufleitung (16) und die Vorlaufleitung (19) über eine weitere Leitung (32) verbunden sind, und dass bei der Verbindungsstelle der weiteren Leitung (32) mit der Vorlaufleitung (19) ein Bypassventil (33) angeordnet ist.

8. Kältespeicheranlage nach einem der Ansprüche 1 bis 7, dadurch gekennzeichnet, dass das im ersten Kreislauf (8) und im zweiten Kreislauf (12) zirkulierende Medium eine Glykollösung ist.

9. Kältespeicheranlage nach einem der Ansprüche 1 bis 8, dadurch gekennzeichnet, dass die Mittel (29) zur Umwälzung des Wassers (3) im Behälter (2) aus einem Druckluftleitungsnetz besteht, deren Leitungen (30) im Bodenbereich (21) des Behälters (2) angeordnet sind, in welche Druckluft einspeisbar ist, welche durch in den Leitungen (30) angebrachte Bohrungen ausströmt.

10. Kältespeicheranlage nach einem der Ansprüche 1 bis 9, dadurch gekennzeichnet, dass die Zuführmittel (27) aus mehreren Rohrleitungen (28) bestehen, die im Bereich der Oberfläche des Wassers (3) im Behälter (2) und über diese verteilt angeordnet sind, dass die Rohrleitungen (28) miteinander verbunden sind und mit Durchgangsöffnungen versehen sind, durch welche das zugeführte Wasser ausströmt.

11. Kältespeicheranlage nach einem der Ansprüche 1 bis 10, dadurch gekennzeichnet, dass die Wegführmittel (22) aus mehreren Rohrleitungen (23) bestehen, die im Bodenbereich (21) des mit Wasser (3) gefüllten Behälters (2) und über diesen verteilt angeordnet sind, dass die Rohrleitungen (23) miteinander verbunden sind und mit Durchgangsöffnungen versehen sind, durch welche das wegzuführende Wasser in die Rohrleitungen (23) einströmt.

12. Kältespeicheranlage nach einem der Ansprüche 1 bis 11, dadurch gekennzeichnet, dass die ersten Wärmetauscher (4) aus zwei parallel angeordneten Rohren (5) gebildet sind, welche jeweils mit einem längs verlaufenden Kanal (37) ausgestattet sind, die mit dem jewei!igen Rohr (5) über Bohrungen (38) verbunden sind, dass in einen Kanal (37) eines Rohres (5) die einen Enden (39) der Wärmetauscherrohre (6) eingesetzt sind, während die anderen Enden (40) in den Kanal (37) des anderen Rohres (5) eingesetzt sind, so dass die Wärmetauscherrohre (6) jeweils eine Schlaufe (7) bilden.

13. Kältespeicheranlage nach Anspruch 12, dadurch gekennzeichnet, dass die Enden (39, 40) der Wärmetauscherrohre (6) derart in die Kanäle (37) der Rohre (5) eingesetzt sind, dass die Wärmetauscherrohre (6) unmittelbar nebeneinander zu liegen kommen, und dass die jeweils nebeneinander liegenden Schlaufen (7) in der jeweiligen normal zu den Rohren (5) stehenden Ebene gegenseitig verschoben sind und durch Distanzstege (44) in dieser Position gehalten sind.

14. Kältespeicheranlage nach Anspruch 12 oder 13, dadurch gekennzeichnet, dass die Rohre (5), die Kanäle (37) und die Wärmetauscherrohre (6) der ersten Wärmetauscher (4) aus Polypropylen bestehen.

## Claims

1. Cold-storing installation with an ice reservoir (1), which comprises an insulated container (2) filled with water (3) into which heat-exchange pipes (6) of first heat exchangers (4) are inserted, which form together with at least one refrigerating machine a first circuit (8), in which a medium is circulated for charging the ice reservoir (1) and passes through the heat-exchange pipes (6) so that the water contained in the container (2) is transformed into ice, as well as means (29) for circulation of the water in the container (2), and with a second circuit (12) which is formed by the heat-exchange pipes (6) of the first heat exchanger (4) and at least one second heat exchanger (11), through which second cicuit (12) the medium can be diverted during discharging of the reservoir (1), characterised in that supply means (27) for supply of water in the container (2) and leading away means (22) for removal of cooled water from the container (2) for discharging the revervoir are provided, in that in at least a second heat exchanger (11) a working medium can be cooled which circulates in a working medium circuit (14) and can be led via a return flow pipe (16) and a forward flow pipe (19) through the second heat exchanger (11), and in that provided in the working medium circuit (14) between the return flow pipe (16) and the forward flow pipe (19) are means (18; 34, 35) through which the cooled water that can be withdrawn from the container (2) can be brought into operative contact with the working medium so that the working medium is additionally cooled.

2. Cold-storing installation according to claim 1, characterised in that the working medium circulating in the working-medium circuit (14) is water.

3. Cold-storing installation according to claim 1 or 2, characterised in that inserted in the working-medium circuit (14) is a first pump (15) and in the second circuit (12) a second pump (13).

4. Cold-storing installation according to one of the claims 1 to 3, characterised in that the means installed in the working-medium circuit (14) consist of a third heat exchanger (18), which is disposed after the second heat exchanger (11), and through which the working medium is conveyable after passing through the second heat exchanger (11), and in that the water withdrawn from the container (2) through the leading away means (22) can be conducted through this third heat exchanger (18) in a third circuit (20) and can be led back into the container (2) via the supply means (27).

5. Cold-storing installation according to claim 4, characterized in that a third pump (25) is used in the third circuit (20).

6. Cold-storing installation according to claim 2 or 3, characterised in that the means disposed in said working-medium circuit (14) consist of a first connection pipe (34), which connects the second heat exchanger (11) to the supply means (27), so that the working medium reaches the container (2) after passing through the second heat exchanger (11), and of a second connection pipe (35), which connects the leading away means (22) to the forward flow pipe (19) of the working-medium circuit (14).

7. Cold-storing installation according to one of the claims 1 to 6, characterised in that in the working-medium circuit (14) the return flow pipe (16) and the forward flow pipe (19) are connected via a further pipe (32), and in that disposed at the connection point of the further pipe (32) with the forward flow pipe (19) is a bypass valve (33).

8. Cold-storing installation according to one of the claims 1 to 7, characterised in that the medium circulating in the first circuit (8) and in the second circuit (12) is a glycol solution.

9. Cold-storing installation according to one of the claims 1 to 8, characterised in that the means (29) for circulation of the water (3) in the container (2) consist of a compressed air supply network, the pipes (30) of which are disposed in the bottom region (21) of the container (2), into which pipes compressed air can be fed in, which flows out through bores made in the pipes (30).

10. Cold-storing installation according to one of the claims 1 to 9, characterised in that the supply means (27) consist of a plurality of conduits (28), which are disposed in the region of the surface of the water (3) in the container (2) and distributed over this surface, in that the conduits (28) are connected to one another and are provided with ports through which the supplied water flows out.

11. Cold-storing installation according to one of the claims 1 to 10, characterised in that the leading away means (22) consists of a plurality of conduits (23) which are disposed in the bottom region (21) of the container (2) filled with water (3) and distributed over this region, in that the conduits (23) are connected to one another and are provided with ports through which the water to be led away flows into the conduits (23).

12. Cold-storing installation according to one of the claims 1 to 11, characterised in that the first heat exchangers (4) are formed by two pipes (5) disposed parallel, which are each provided with a longitudinally running channel (37), which are connected to the respective pipe (5) through bores (38), in that the one ends (39) of the heat-exchange pipe (6) are inserted into one channel (37) of a pipe (5), while the other ends (40) are inserted into the channel (37) of the other pipe (5), so that the heat-exchange pipes (6) form in each case a loop (7).

13. Cold-storing installation according to claim 12, characterised in that the ends (39, 40) of the heat-exchange pipes (6) are inserted in the channels (37) of the pipes (5) in such a way that the heat-exchange pipes (6) come to lie immediately next to one another, and in that each of the loops (7) lying next to one another in the respective plane standing normally with respect to the pipes (5) are mutually offset, and are held in this position by spacers (44).

14. Cold-storing installation according to claim 12 or 13, characterised in that the pipes (5), the channels (37) and the heat-exchange pipes (6) of the first heat exchanger (4) are made of polypropylene.

## Revendications

1. Installation de stockage de froid équipée d'un réservoir de glace (1) comprenant une cuve (2) isolée remplie d'eau (3), dans laquelle sont logés des tubes (6) d'échangeurs de chaleur d'un premier ensemble d'échangeurs de chaleur (4) qui, avec au moins une machine frigorifique, constituent un premier circuit (8) dans lequel, pour charger le réservoir de glace (1), circule un fluide qui passe dans les tubes (6) d'échangeurs de chaleur, de telle sorte que l'eau se trouvant dans la cuve (2) se transforme en glace, et se trouvent des moyens d'alimentation (27) servant à amener de l'eau dans la cuve (2) et des moyens d'évacuation (22) servant à prélever de l'eau réfrigérée dans la cuvre (2) pour décharger le réservoir, et comprenant des moyens (29) qui agitent l'eau dans la cuve (2), avec un deuxième circuit (12) constitué par les tubes (6) des premiers échangeurs de chaleur (4) et au moins un deuxième échangeur de chaleur (11), deuxième circuit (12) par lequel le fluide peut être dévié lors de la décharge du réservoir de glace (1), caractérisé en ce que, dans au moins un deuxième échangeur de chaleur (11), un fluide de travail peut être réfrigéré, fluide qui circule dans un circuit (14) de fluide de travail et auquel on peut faire traverser le deuxième échangeur de chaleur (11) grâce à une conduite de retour (16) et à une conduite aller (19), et en ce que des moyens (18; 34, 35) sont disposés dans le circuit (14) du fluide de travail, entre la conduite de retour (16) et la conduite aller (19), moyens grâce auxquels l'eau réfrigérée pouvant être prélevée dans la cuve (2) peut être mise en mesure d'influer sur le fluide de travail, de telle sorte que ce dernier est réfrigéré davantage.

2. Installation de stockage de froid selon la première revendication, caractérisée en ce que le fluide de travail qui circule dans le circuit (14) de fluide de travail est de l'eau.

3. Installation de stockage de froid selon la revendication 1 ou 2, caractérisée en ce qu'une première pompe (15) est montée dans le circuit (14) de fluide de travail et une deuxième pompe (13) dans le deuxième circuit (12).

4. Installation de stockage de froid selon l'une des revendications 1 à 3, caractérisée en ce que les moyens montés dans le circuit (14) du fluide de travail consistent en un troisième échangeur de chaleur (18) qui est placé après le deuxième échangeur de chaleur (11) et dans lequel on peut faire passer le fluide de travail après qu'il a traversé celui-ci, et en ce que l'eau prélevée dans la cuvre (2) par l'intermédiaire des moyens d'évacuation (22) peut être envoyée à travers ce troisième échangeur de chaleur (18), dans un troisième circuit (20), et ramenée dans la cuve (2) en passant par les moyens d'alimentation (27).

5. Installation de stockage de froid selon la revendication 4, caractérisée en ce qu'une troisième pompe (25) est montée dans le troisième circuit (20).

6. Installation de stockage de froid selon la revendication 2 ou 3, caractérisée en ce que les moyens montés dans le circuit de fluide de travail (14) sont constitués par une première conduite de liaison (34) qui relie le deuxième échangeur de chaleur (11) aux moyens d'alimenation (27), de telle sorte que, après avoir traversé le deuxième échangeur de chaleur (11), le fluide de travail arrive dans la cuve (2), et par une deuxième conduite de liaison (35) qui relie les moyens d'évacuation (22) à la conduite aller (19) du circuit de fluide de travail (14).

7. Installation de stockage de froid selon l'une des revendications 1 à 6, caractérisée en ce que, dans le circuit de fluide de travail (14), la conduite de retour (16) et la conduite aller (19) sont reliées par une conduite supplémentaire (32), et en ce qu'une soupape de dérivation (33) est montée au point de raccordement de la conduite supplémentaire (32) à la conduite aller (19).

8. Installation de stockage de froid selon l'une des revendications 1 à 7, caractérisée en ce que le fluide qui circule dans le premier circuit (8) et dans le deuxième circuit (12) est une solution de glycol.

9. Installation de stockage de froid selon l'une des revendications 1 à 8, caractérisée en ce que les moyens (29) servant à agiter l'eau (3) dans la cuve (2) sont constitués par un réseau de conduites d'air comprimé dont les conduites (30) sont montées au voisinage du fond (21) de la cuve (2) et dans lesquelles on peut injecter de l'air comprimé qui s'échappe par des trous percés dans les conduites (30).

10. Installation de stockage de froid selon l'une des revendications 1 à 9, caractérisée en ce que les moyens d'alimentation (27) sont constitués par plusieurs canalisations (28) montées près de la surface de l'eau (3) dans la cuve (2) et réparties sur sa superficie, et en ce que les canalisations (28) sont reliées entre elles et pourvues d'ouvertures de passage par lesquelles l'eau amenée s'écoule.

11. Installation de stockage de froid selon l'une des revendications 1 à 10, caractérisée en ce que les moyens d'évacuation (22) sont constitués par plusieurs canalisations (23) montées près du fond (21) de la cuve (2) remplie d'eau (3) et réparties sur sa superficie, et en ce que les canalisations (23) sont reliées entre elles et pourvues d'ouvertures de passage par lesquelles l'eau à évacuer pénètre dans les canalisations (23).

12. Installation de stockage de froid selon l'une des revendications 1 à 11, caractérisée en ce que les premiers échangeurs de chaleur (4) sont constitués par deux tuyaux (5) parallèles dont chacun est pourvu d'une rigole longitudinale (37) qui est reliée au tuyau correspondant ( 5) par des trous (38), et en ce que l'une des extrémités (39) de chacun des tubes (6) des échangeurs de chaleur aboutit dans une rigole (37) d'un tuyau (5), tandis que les autres extrémités (40) aboutissent à la rigole (37) de l'autre tuyau (5), de telle sorte que les tubes (6) d'échangeurs de chaleur forment chacun une boucle (7).

13. Installation de stockage de froid selon la revendication 12, caractérisée en ce que les extrémités (39, 40) des tubes (6) d'échangeurs de chaleur sont placées dans les rigoles (37) des tuyaux (5) de telle manière que les tubes (6) d'échangeurs de chaleur se trouvent directement les uns à côté des autres, et en ce que les boucles (7) situées l'une à côté de l'autre sont décalées l'une par rapport à l'autre, chacune dans le plan normal à chacun des tuyaux (5), et sont maintenues dans cette position par des entretoises d'écartement (44).

14. Installation de stockage de froid selon la revendication 12 ou 13, caractérisée en ce que les tuyaux (5), les rigoles (37) et les tubes (6) des premiers échangeurs de chaleur (4) sont en polypropylène.
